# FASCICULE DE BREVET EUROPEEN

(11) **EP 4 474 288 B1**
(45) Date de publication et mention de la délivrance du brevet: **30.07.2025**
(21) Numéro de dépôt: 24159154.4
(22) Date de dépôt: 22.02.2024
(51) Int. Cl.: B64D 33/08, B64C 27/04

(54) **AÉRONEF MUNI D'UN SYSTÈME DE VENTILATION ANTI-PLUIE POUR UNE MACHINE ELECTRIQUE**
FLUGZEUG MIT REGENSCHUTZENTLÜFTUNG FÜR EINE ELEKTRISCHE MASCHINE
AIRCRAFT WITH ANTIRAIN VENTILATION SYSTEM FOR AN ELECTRIC MACHINE

(30) Priorité: 09.06.2023 FR 2305863
(43) Date de publication de la demande: 11.12.2024
(73) Titulaire: Airbus Helicopters, 13725 Marignane Cedex (FR)
(72) Inventeur: ALLIOT, Pascal, 13119 SAINT SAVOURNIN (FR); FORT, Patrick, 13005 MARSEILLE (FR)
(74) Mandataire: GPI Brevets

(56) Documents cités:
- CA-A1- 3 055 979
- US-A- 2 362 552
- US-A1- 2019 093 541

## Description

La présente invention concerne un aéronef muni d'un système de ventilation anti-pluie pour une machine électrique.

Un aéronef comporte usuellement une installation motrice comprenant au moins un moteur voire au moins une boîte de transmission de puissance. Par exemple, un giravion est muni d'au moins un moteur pour entraîner en rotation au moins un rotor via une boîte de transmission de puissance. Ce rotor participe au moins partiellement à la sustentation et/ou à la propulsion du giravion.

Le ou les moteurs peuvent être agencés dans un compartiment moteur séparé de l'extérieur de l'aéronef via des capotages. Le terme « capotage » peut désigner un capot, une structure mobile, un carénage, un caisson profilé voire cloisonné...

Le ou les moteurs peuvent être des moteurs thermiques alimentés en carburant et en air.

Par ailleurs, un aéronef peut comprendre une machine électrique. Une machine électrique peut prendre la forme d'un générateur électrique susceptible de convertir une énergie mécanique en une énergie électrique, d'un moteur électrique susceptible de convertir une énergie électrique en une énergie mécanique pour mettre en mouvement un système mécanique, ou encore d'un starter-générateur connecté à un moteur thermique pour démarrer le moteur thermique ou produire de l'énergie électrique en fonction du besoin. Par exemple, un starter-générateur peut être relié cinématiquement à un générateur de gaz d'un turbomoteur.

Une telle machine électrique est susceptible de s'échauffer en utilisation. L'aéronef peut alors comprendre un système de ventilation pour refroidir la machine électrique en prélevant de l'air frais à l'extérieur de cet aéronef. Bien qu'efficace, l'aéronef peut rencontrer des conditions pluvieuses et de l'eau de pluie non désirée peut éventuellement atteindre la machine électrique.

Des documents sont éloignés de cette problématique en décrivant des entrées d'air de moteurs.

Par exemple, le document US 20200023985 A1 décrit un système ayant une entrée d'air logeant un filtre et recouverte d'une écope.

Le document US 2362552 A décrit aussi une écope disposée au-dessus d'une bouche d'entrée d'air.

Le document FR 3065757 D1 décrit une bouche d'entrée d'air coopérant avec un redresseur.

Le document US 2019/093541 concerne un aéronef muni d'un collecteur d'échappement offrant une ou plusieurs conduites pour diriger et expulser les gaz d'échappement vers le haut. Ce collecteur d'échappement comporte une structure de support d'un capot positionné en haut et/ou sur les côtés de l'aéronef.

Le document US 2362552 divulgue quant à lui une écope d'admission d'air visant à séparer l'air et les autres particules et matières plus lourdes entrantes, telles que des gouttelettes d'eau et de la glace par exemple, afin d'alimenter une cabine d'aéronef ou un moteur en air frais.

Le document CA 3055979 décrit un système de ventilation d'un compartiment moteur d'un hélicoptère comprenant une buse d'éjection, quatre prises d'air, deux chambres d'air et deux fentes d'air. La buse d'éjection englobe l'embouchure d'une conduite d'échappement du moteur et utilise le flux de gaz d'échappement pour aspirer l'air dans, à travers, et hors du compartiment moteur. Deux prises d'air sont fixées au fuselage de l'hélicoptère en avant du compartiment moteur pour alimenter en air les deux chambres d'air. Deux prises d'air supplémentaires sont fixées en avant du compartiment moteur pour fournir de l'air à la zone supérieure de ce compartiment moteur.

Les documents EP 3560837 A1, US 20190084687 A1, EP 3418183 A1, EP 3403919 A1, FR 3026136 A1, FR 3021994 A1, EP 2880295 A4, EP 2776319 A1, EP 2226473 A3, EP 1828571 A1, US 3208214 A, US 2362552 A, US 2365328 A sont aussi connus.

La présente invention a alors pour objet de proposer un aéronef innovant permettant de s'affranchir des limitations mentionnées ci-dessus.

L'invention vise un aéronef muni d'au moins une machine électrique logée dans un compartiment de cet aéronef, ledit compartiment étant séparé par un capotage d'un milieu extérieur, le milieu extérieur étant situé en dehors de l'aéronef, ledit aéronef comprenant un système de ventilation pour acheminer de l'air du milieu extérieur à la machine électrique.

Le système de ventilation comporte un conduit connecté à la machine électrique et s'étendant jusqu'à une section libre, la section libre étant située dans ledit milieu extérieur, le conduit traversant un passage du capotage, le conduit s'étendant partiellement dans le compartiment et partiellement dans le milieu extérieur, un espace vide entourant dans le passage le conduit et séparant le conduit du capotage, le système de ventilation comprenant une écope en vis-à-vis de la section libre sans l'obturer. Cette écope peut être située au-dessus de la section libre sans l'obturer selon un axe vertical lorsque l'aéronef est sur un sol horizontal.

Par exemple, la machine électrique peut être un générateur électrique ou un moteur électrique ou un starter-générateur. La machine électrique peut éventuellement être connectée à un moteur thermique mettant en mouvement une chaîne mécanique comprenant possiblement au moins un rotor. Eventuellement, l'aéronef peut être un giravion.

Dès lors, le système de ventilation selon l'invention peut tendre à limiter l'acheminement d'eau, par exemple de l'eau de pluie, vers la machine électrique.

En cas de pluie, de l'eau peut ruisseler sur le capotage. Toutefois, le conduit saille dans le milieu extérieur en ayant un tronçon qui s'étend dans ce milieu extérieur sans toucher le capotage. Dès lors, l'eau de pluie qui atteint éventuellement le passage en ruisselant sur le capotage ne pénètre pas dans le conduit, mais peut tomber dans l'espace vide présent entre le conduit et la bordure du capotage qui délimite le passage. Cette eau ne pénètre donc pas dans la machine électrique.

En outre, l'écope est disposée au-dessus du conduit. Par suite, l'écope limite le risque de voir de l'eau de pluie tomber directement dans le conduit. L'écope peut aussi faciliter l'ingestion d'air dans le conduit durant l'avancement de l'aéronef.

L'aéronef peut de plus comporter une ou plusieurs des caractéristiques qui suivent, prises seules ou en combinaison.

Selon une possibilité, l'écope et ledit capotage peuvent ménager un couloir s'étendant selon un axe d'extension d'une première surface ouverte sur le milieu extérieur jusqu'à une deuxième surface ouverte sur le milieu extérieur.

L'écope n'est ainsi pas seulement ouverte vers le conduit mais peut être traversée de part en part par de l'air ou un liquide, lors de l'avancement de l'aéronef. Cette caractéristique permet d'éviter d'accumuler dans l'écope de l'eau de pluie, susceptible de tomber dans le conduit.

Eventuellement, l'axe d'extension peut être parallèle à un axe de roulis de l'aéronef.

Ainsi un liquide qui pénètre dans le couloir par une surface, lors de l'avancement vers l'avant de l'aéronef, peut en sortir par l'autre surface.

Selon une possibilité compatible avec les précédentes, ledit conduit peut comporter au moins un orifice de drainage en amont de la machine électrique selon un sens allant du milieu extérieur vers la machine électrique.

Au moins une partie de l'eau qui pénétrerait dans le conduit ou qui se formerait dans le conduit par condensation est ainsi évacuée par le ou les orifices de drainage pour ne pas atteindre la machine électrique.

Eventuellement le conduit peut comporter un tronçon d'entrée traversant le capotage et un tronçon de sortie connecté au tronçon d'entrée et débouchant sur la machine électrique, le tronçon de sortie s'étendant selon un axe d'allongement dans le prolongement de la machine électrique, le tronçon d'entrée s'étendant selon un axe en élévation du tronçon de sortie vers le milieu extérieur, ledit orifice de drainage étant ménagé dans le tronçon de sortie.

Le ou les orifices de drainage sont positionnés de manière à optimiser l'évacuation d'eau.

Selon une possibilité compatible avec les précédentes, ledit conduit peut être connecté à une structure immobile dans un référentiel de l'aéronef par au moins une attache.

Le capotage peut ainsi être manipulé indépendamment du conduit.

Eventuellement, le conduit comporte alors une liberté de mouvement limitée à une plage de positions par rapport à la structure.

Ainsi, le conduit n'entrave pas un déplacement relatif de la machine électrique par rapport au capotage. En effet, en utilisation la machine électrique est susceptible de légèrement bouger. L'attache permet de tolérer un tel déplacement.

Par exemple, l'attache comporte un collier qui entoure le conduit, ce collier étant connecté à la structure par une liaison conférant au moins un degré de liberté en translation et/ou au moins un degré de liberté en rotation au collier.

Selon une possibilité compatible avec les précédentes, le passage peut avoir une forme oblongue.

Le passage peut présenter une forme annulaire oblongue selon l'axe d'extension et permet au conduit de se déplacer avec la machine électrique par rapport au capotage.

Selon une possibilité compatible avec les précédentes, une distance minimale sépare ledit conduit et une bordure du capotage délimitant le passage, cette distance minimale étant comprise entre 5 millimètres et 20 millimètres.

L'expression « distance minimale » désigne la plus petite distance à chaque instant entre le conduit et la bordure.

Cette distance minimale est suffisante pour générer un espace entre la bordure du passage et le conduit permettant d'évacuer de l'eau.

Selon une possibilité compatible avec les précédentes, le conduit émerge du capotage dans le milieu extérieur d'une hauteur minimal comprise entre 5 millimètres et 20 millimètres.

L'expression « hauteur minimale » désigne la plus petite distance à chaque instant entre un sommet du conduit et le passage.

Cette hauteur minimale est suffisante pour limiter les risques d'ingestion d'eau.

La hauteur du sommet du conduit par rapport au passage peut être variable en azimut. Par ailleurs, la hauteur minimale peut être dépendante de la dimension du passage.

Selon une possibilité compatible avec les précédentes, l'écope peut être agencée entre le passage et un rotor dudit aéronef, ledit rotor étant situé dans le milieu extérieur.

Le passage peut être ainsi disposé sur un capotage en regard d'un rotor, par exemple sur une face supérieure d'une enveloppe de l'aéronef.

Selon une possibilité compatible avec les précédentes, le système de ventilation peut comporter au moins une grille de protection.

Le terme « grille » désigne un organe ajouré permettant de limiter l'ingestion de corps extérieur.

Ainsi, une grille de protection peut être agencée dans la section libre.

La grille de protection peut entièrement couvrir la section libre

De manière complémentaire ou alternative, une grille de protection peut être agencée entre l'écope et le capotage.

La grille de protection peut entièrement couvrir une surface de passage délimité par l'écope et le capotage.

L'invention et ses avantages apparaîtront avec plus de détails dans le cadre de la description qui suit avec des exemples donnés à titre illustratif en référence aux figures annexées qui représentent :
la figure 1, un schéma tridimensionnel illustrant partiellement un aéronef selon l'invention,
la figure 2, une vue partiellement transparente de l'aéronef de la figure 1,
la figure 3, un schéma montrant un conduit traversant un passage du capotage en vue de dessus, et
la figure 4, un schéma présentant l'écope.

Les éléments présents dans plusieurs figures distinctes sont affectés d'une seule et même référence.

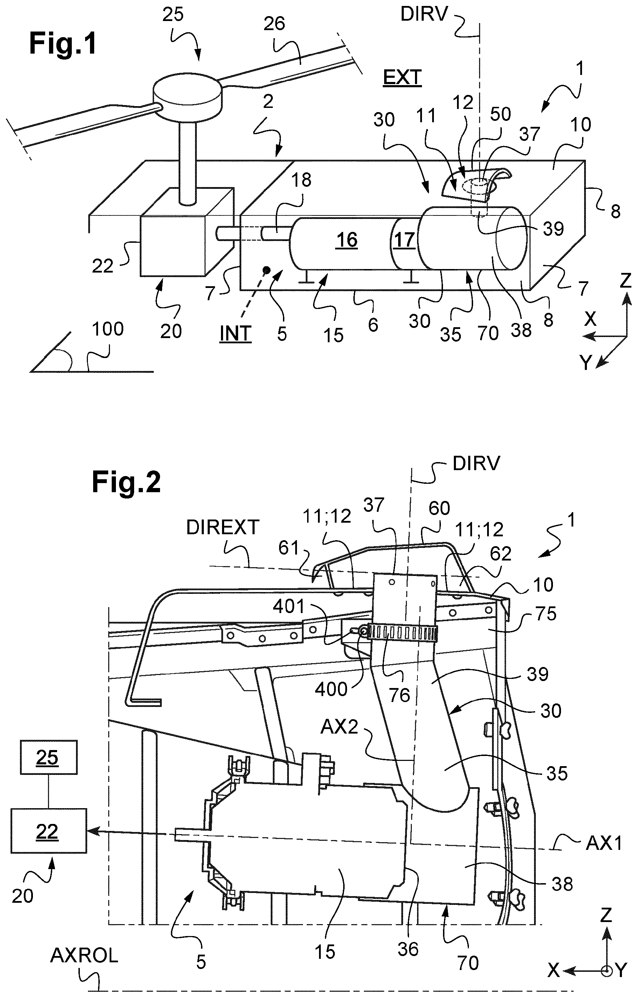

Les figures 1 à 4 présentent un référentiel d'un aéronef 1 selon l'invention. Ce référentiel comprend trois axes X, Y et Z orthogonaux les uns par rapport aux autres.

L'axe X est dit longitudinal. Le terme « longitudinal » est relatif à toute direction parallèle à cet axe X.

L'axe Y est dit transversal. Le terme « transversal » est relatif à toute direction parallèle à cet axe Y.

Enfin, l'axe Z est dit en élévation. L'expression « en élévation » est relative à toute direction parallèle à cet axe Z.

La figure 1 présente un aéronef 1 selon l'invention de manière schématique. L'aéronef 1 est représenté de manière partielle pour ne pas alourdir inutilement la figure 1.

L'aéronef est muni d'une cellule 2 dans laquelle se trouve au moins un compartiment 5, tel qu'un compartiment moteur par exemple. Une machine électrique 17 est logée au moins partiellement dans l'espace interne INT du compartiment 5.

Le compartiment 5 est fermé notamment par un capotage 10, ce capotage 10 séparant un espace interne INT du compartiment 5 d'un milieu extérieur EXT situé à l'extérieur de l'aéronef 1.

Le compartiment 5 peut être délimité par au moins une paroi 6, 7, 8, une des parois comprenant le capotage 10. La ou les parois 6, 7, 8 peuvent être des parois anti-feu, par exemple ignifugées. Le compartiment 5 peut être sectionné en plusieurs sous-compartiment.

Par exemple, le capotage 10 se trouve au-dessus de la machine électrique 17 lorsque l'aéronef 1 repose sur un sol 100. Dès lors, le compartiment 5 est délimité longitudinalement par deux parois longitudinales 7, transversalement par deux parois transversales 8, et verticalement par un plancher 6 et une paroi comprenant le capotage 10.

Par ailleurs, la machine électrique 17 peut coopérer avec un moteur thermique 15. Ce moteur thermique 15 peut comporter un arbre de puissance 18, connecté à une chaîne mécanique 20, possiblement en traversant une paroi longitudinale 7. Cette chaîne mécanique 20 de transmission de puissance peut mettre en mouvement au moins un rotor 25. Par exemple, l'arbre de puissance 18 est connecté à une boîte de transmission de puissance 22 mettant en rotation le rotor 25. Le rotor 25 comporte une pluralité de pales 26, la figure 1 illustrant une seule pale complète par commodité. Ce rotor 25 forme par exemple une voilure tournante 2.

Le moteur thermique 15 est apte à brûler un carburant pour mettre en mouvement l'arbre de puissance 18. Selon une possibilité, le moteur thermique 15 peut comprendre un bloc moteur 16 de type turbomoteur ou du type d'un moteur à pistons par exemple.

Par exemple, la machine électrique peut coopérer avec le moteur thermique. La machine électrique peut comprendre un générateur électrique, un moteur électrique ou un starter-générateur. Par exemple, la machine électrique 17 peut fonctionner au choix selon un mode démarreur et selon un mode générateur d'énergie électrique. En présence d'un turbomoteur, la machine électrique peut être connectée à un générateur de gaz du turbomoteur.

Par ailleurs, l'aéronef 1 comprend un système de ventilation 30 pour acheminer de l'air du milieu extérieur EXT vers la machine électrique 17.

La figure 2 est une vue tronquée et rendue partiellement transparente montrant le système de ventilation 30. En particulier, une partie du capotage 10 est rendue transparente.

Le système de ventilation 30 comporte un conduit 35 débouchant sur la machine électrique 17 et le milieu extérieur EXT.

Le conduit 30 comporte une zone proximale 36 débouchant sur la machine électrique 17 et s'étend jusqu'à une section libre 37 ouverte sur le milieu extérieur.

La section libre 37 est située dans le milieu extérieur EXT. Le conduit 35 s'étend partiellement dans le milieu extérieur EXT et partiellement dans le compartiment 5, pour être connecté à la machine électrique 17. A cet effet, le conduit 35 traverse de part en part le capotage 10. Plus précisément, le conduit 35 passe au travers d'un passage 11 ménagé dans le capotage 10. Dès lors, le conduit 35 présente un tronçon muni de la section libre en saillie du capotage 10 dans le milieu extérieur EXT.

Par exemple, le conduit 35 comporte un tronçon de sortie 38 solidaire d'un tronçon d'entrée 39. Le tronçon de sortie 38 comporte la zone proximale 36 alimentant en air frais la machine électrique 17 et peut s'étendre selon un axe d'allongement AX1 dans le prolongement de la machine électrique 17. Par exemple, le tronçon de sortie a une forme de cylindre à base circulaire. Le tronçon d'entrée 39 comporte la section libre 37 et peut s'étendre selon un axe en élévation AX2, différent de l'axe d'allongement AX1, du tronçon de sortie 38 vers le milieu extérieur EXT en traversant le passage 11 du capotage 10.

Par ailleurs, le conduit 35 peut être attaché par une ou des attaches 76 à une structure 75 de l'aéronef 1, cette structure 75 étant immobile dans le référentiel de l'aéronef. Selon l'exemple illustré, le tronçon d'entrée 39 est attaché à une structure 75, portant le capotage 10, par une attache de type collier 76. Ce collier 76 serre un tronçon du conduit, puis est fixé à la structure 75 par un système vis-écrou 400 ou un équivalent traversant un trou oblong 401 de la structure 75. Selon l'exemple, la structure comporte un support muni du trou oblong 401, ce support pouvant être solidaire d'une traverse de l'aéronef. Le collier 76 et le conduit 35 peuvent ainsi être mobiles en translation par rapport à la structure 75, dans les limites imposées par le trou oblong 401.

Selon une possibilité indépendante de ces aspects, le conduit 35 peut comporter au moins un orifice 70 de drainage en amont de la machine électrique 17. Le terme « amont » est à considérer selon un sens allant du milieu extérieur EXT vers la machine électrique 17.

Un ou des orifices 70 peuvent notamment être ménagés dans la zone la plus basse du conduit 35 lorsque l'aéronef repose sur un sol horizontal 100. Selon l'exemple illustré, au moins un orifice 70 de drainage est percé dans le tronçon de sortie 38.

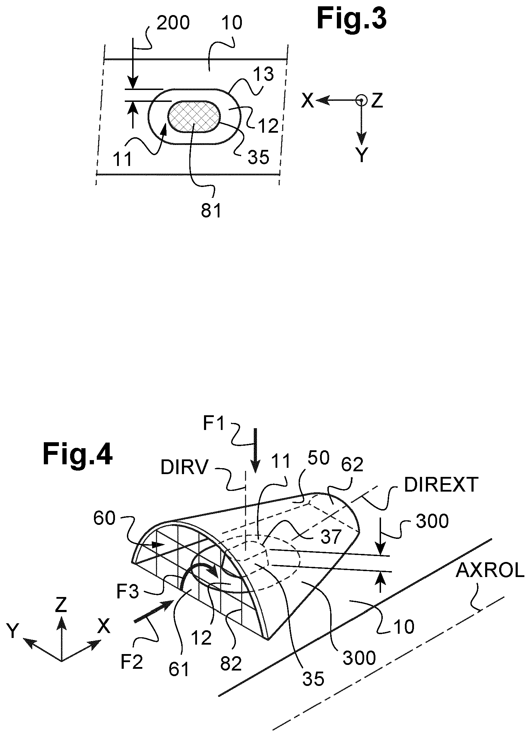

Selon un autre aspect et tel qu'illustré sur la figure 3, le passage 11 est délimité par une bordure 13 du capotage 10. Le conduit 35 traverse alors le passage 11 sans entrer en contact avec la bordure 13. Un espace vide 12 entoure alors, dans le passage 11, le conduit 35. Cet espace vide sépare en permanence le conduit 35 du capotage 10.

Ce passage 11 peut avoir une forme oblongue. Ce passage 11 peut autoriser un déplacement relatif, par exemple en translation, entre le conduit 35 et le capotage 10.

En outre, une distance minimale 200 sépare le conduit 35 et la bordure 13 du capotage délimitant le passage 11, cette distance minimale 200 étant éventuellement comprise entre 5 millimètres et 20 millimètres.

Par ailleurs, une grille de protection peut être solidarisée au conduit 35. Par exemple, une grille de protection 81 est agencée dans la section libre 37.

En outre et en référence à la figure 4, le conduit 35 peut dépasser du capotage dans le milieu extérieur EXT d'une hauteur 300 minimale comprise entre 5 millimètres et 20 millimètres.

En outre, le système de ventilation 30 comprend une écope 50. L'écope 50 est en vis-à-vis de la section libre 37 et n'obture pas cette section libre 37. Lorsque l'aéronef 1 est sur un sol 100 horizontal, l'écope 50 est située au-dessus de la section libre 37, sans l'obturer, par exemple selon un axe vertical DIRV. En présence d'un rotor 25 tel qu'illustré sur la figure 1, l'écope 50 peut être agencée entre le passage 11 et le rotor 25.

En référence à la figure 4, cette écope 50 peut comprendre une plaque disposée au-dessus de la section libre 37. Cette plaque peut être fixée au capotage 10 par des moyens usuels, et par exemple des moyens de vissage, sertissage, collage, soudage ou autres. Cette plaque est courbée selon l'exemple illustré.

L'écope 50 et le capotage 10 peuvent former un couloir 60, entre l'écope 50 et le capotage 10. Ce couloir 60 peut s'étendre selon un axe d'extension DIREXT d'une première surface 61 ouverte sur le milieu extérieur EXT jusqu'à une deuxième surface 62 ouverte sur le milieu extérieur EXT. Cet axe d'extension DIREXT peut être parallèle à un axe de roulis AXROL de l'aéronef 1.

Par ailleurs, l'écope 50 peut être effilée en allant de la première surface 61 à la deuxième surface 62. La première surface 61 peut avoir une première aire supérieure à une deuxième aire de la deuxième surface 62 pour tendre à diriger l'air vers le conduit 35. Par exemple l'écope 50 a une forme sensiblement tronconique.

En outre, une grille de protection 82 peut être agencée entre l'écope 50 et le capotage 10, par exemple dans la première surface 61.

La figure 4 illustre le fonctionnement de l'invention. Une pluie tombant sur l'aéronef selon la flèche F1 impacte alors l'écope 50 et ne pénètre pas dans le conduit 35.

L'écope 50 n'obture pas le conduit 35, et n'empêche pas l'ingestion d'air dans le conduit 35.

De plus, si de l'eau coule le long du capotage 10 selon la flèche F2, cette eau rentre dans le couloir 60 par la première surface 61 et tend à tomber dans l'espace vide 12, sans pénétrer dans le conduit 35 qui présente une section libre 37 en saillie au-dessus du passage 11 sans toucher le capotage. Si de l'eau contourne le passage 11, cette eau sort de l'écope 50 par la deuxième surface 62, et ne risque donc pas de s'accumuler dans l'écope jusqu'à déborder dans le conduit 35. Enfin, si de l'eau s'écoule dans le conduit 35, le ou les orifices 70 de drainage peuvent l'évacuer en dehors du conduit 35.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Aéronef (1) muni d'au moins une machine électrique (17) logée dans un compartiment (5) de cet aéronef, ledit compartiment (5) étant séparé par un capotage (10) d'un milieu extérieur (EXT), le milieu extérieur (EXT) étant situé en dehors de l'aéronef (1), ledit aéronef (1) comprenant un système de ventilation (30) pour acheminer de l'air du milieu extérieur (EXT) à la machine électrique (17),
**caractérisé en ce que** le système de ventilation (30) comporte un conduit (35) connecté à la machine électrique (17) et s'étendant jusqu'à une section libre (37), la section libre (37) étant située dans ledit milieu extérieur (EXT), le conduit (35) traversant un passage (11) du capotage (10), le conduit (35) s'étendant partiellement dans le compartiment (5) et partiellement dans le milieu extérieur (EXT), un espace vide (12) entourant dans le passage (11) le conduit (35) et séparant le conduit (35) du capotage (10), le système de ventilation (30) comprenant une écope (50) en vis-à-vis de la section libre (37) sans l'obturer.

2. Aéronef selon la revendication 1,
**caractérisé en ce que** ladite écope (50) et ledit capotage (10) ménagent un couloir (60) s'étendant selon un axe d'extension (DIREXT) d'une première surface (61) ouverte sur le milieu extérieur (EXT) jusqu'à une deuxième surface (62) ouverte sur le milieu extérieur (EXT).

3. Aéronef selon la revendication 2,
**caractérisé en ce que** l'axe d'extension (DIREXT) est parallèle à un axe de roulis (AXROL) de l'aéronef (1).

4. Aéronef selon l'une quelconque des revendications 1 à 3, **caractérisé en ce que** ledit conduit (35) comporte au moins un orifice (70) de drainage en amont de la machine électrique (17) selon un sens allant du milieu extérieur (EXT) vers la machine électrique (17).

5. Aéronef selon la revendication 4,
**caractérisé en ce que** ledit conduit (35) comporte un tronçon d'entrée (39) traversant le capotage (10) et un tronçon de sortie (38) connecté au tronçon d'entrée (39) débouchant sur la machine électrique (17), le tronçon de sortie (38) s'étendant selon un axe d'allongement (AX1) dans le prolongement de la machine électrique (17), le tronçon d'entrée (39) s'étendant selon un axe en élévation (AX2) du tronçon de sortie (38) vers le milieu extérieur (EXT), ledit orifice (70) de drainage étant ménagé dans le tronçon de sortie (38).

6. Aéronef selon l'une quelconque des revendications 1 à 5,
**caractérisé en ce que** ledit conduit (35) est connecté à une structure (75) immobile dans un référentiel (X,Y, Z) de l'aéronef (1) par au moins une attache (76).

7. Aéronef selon la revendication 6,
**caractérisé en ce que** ledit conduit (35) comporte une liberté de mouvement limitée à une plage de positions par rapport à la structure (75).

8. Aéronef selon l'une quelconque des revendications 1 à 7, **caractérisé en ce que** ledit passage (11) a une forme oblongue.

9. Aéronef selon l'une quelconque des revendications 1 à 8, **caractérisé en ce qu'**une distance minimale (200) sépare ledit conduit et une bordure (13) du capotage délimitant le passage (11), cette distance minimale(200) étant comprise entre 5 millimètres et 20 millimètres.

10. Aéronef selon l'une quelconque des revendications 1 à 9,
**caractérisé en ce que** ledit conduit (35) émerge du capotage dans le milieu extérieur (EXT) d'une hauteur minimale comprise entre 5 millimètres et 20 millimètres.

11. Aéronef selon l'une quelconque des revendications 1 à 10,
**caractérisé en ce que** l'écope (50) est agencée entre le passage (11) et un rotor (25) dudit aéronef (1), ledit rotor (25) étant situé dans le milieu extérieur (EXT).

12. Aéronef selon l'une quelconque des revendications 1 à 11,
**caractérisé en ce que** le système de ventilation (30) comporte au moins une grille de protection (81, 82).

13. Aéronef selon la revendication 12,
**caractérisé en ce que** ladite grille de protection (81) est agencée dans la section libre (37).

14. Aéronef selon la revendication 12,
**caractérisé en ce que** ladite grille de protection (82) est agencée entre l'écope (50) et le capotage (10).

## Patentansprüche

1. Luftfahrzeug (1) mit mindestens einer elektrischen Maschine (17), die in einer Kammer (5) des Luftfahrzeugs untergebracht ist, wobei die Kammer (5) durch eine Verkleidung (10) von einer Außenumgebung (EXT) getrennt ist, wobei sich die Außenumgebung (EXT) außerhalb des Luftfahrzeugs (1) befindet, wobei das Luftfahrzeug (1) ein Belüftungssystem (30) umfasst, um Luft aus der Außenumgebung (EXT) zur elektrischen Maschine (17) zu leiten,
**dadurch gekennzeichnet, dass** das Belüftungssystem (30) einen Kanal (35) umfasst, der mit der elektrischen Maschine (17) verbunden ist und sich bis zu einem freien Abschnitt (37) erstreckt, wobei sich der freie Abschnitt (37) in der Außenumgebung (EXT) befindet, der Kanal (35) einen Durchgang (11) der Verkleidung (10) durchquert, der Kanal (35) sich teilweise in die Kammer (5) und teilweise in die Außenumgebung (EXT) erstreckt, ein Hohlraum (12) in dem Durchgang (11) den Kanal (35) umgibt und den Kanal (35) von der Verkleidung (10) trennt, und das Belüftungssystem (30) eine dem freien Abschnitt (37) gegenüberliegende, diesen jedoch nicht verschließende Wölbung (50) umfasst.

2. Luftfahrzeug nach Anspruch 1,
**dadurch gekennzeichnet, dass** die Wölbung (50) und die Verkleidung (10) einen Gang (60) bilden, der sich entlang einer Erstreckungsachse (DIREXT) von einer ersten zur Außenumgebung (EXT) hin offenen Fläche (61) bis zu einer zweiten zur Außenumgebung (EXT) hin offenen Fläche (62) erstreckt.

3. Luftfahrzeug nach Anspruch 2,
**dadurch gekennzeichnet, dass** die Erstreckungsachse (DIREXT) parallel zu einer Rollachse (AXROL) des Luftfahrzeugs (1) verläuft.

4. Luftfahrzeug nach einem der Ansprüche 1 bis 3,
**dadurch gekennzeichnet, dass** der Kanal (35) mindestens eine Entwässerungsöffnung (70) stromaufwärts der elektrischen Maschine (17) in einer Richtung von der Außenumgebung (EXT) zur elektrischen Maschine (17) aufweist.

5. Luftfahrzeug nach Anspruch 4,
**dadurch gekennzeichnet, dass** der Kanal (35) einen Einlassabschnitt (39), der die Verkleidung (10) durchquert, und einen Auslassabschnitt (38) aufweist, der mit dem Einlassabschnitt (39) verbunden ist und in die elektrische Maschine (17) mündet, wobei sich der Auslassabschnitt (38) entlang einer Längsachse (AX1) in Verlängerung der elektrischen Maschine (17) erstreckt, wobei sich der Einlassabschnitt (39) entlang einer Höhenachse (AX2) des Auslassabschnitts (38) zur Außenumgebung (EXT) erstreckt, und die Drainageöffnung (70) im Auslassabschnitt (38) ausgebildet ist.

6. Luftfahrzeug nach einem der Ansprüche 1 bis 5,
**dadurch gekennzeichnet, dass** der Kanal (35) über mindestens eine Befestigung (76) mit einer in einem Bezugssystem (X, Y, Z) des Luftfahrzeugs (1) unbeweglichen Struktur (75) verbunden ist.

7. Luftfahrzeug nach Anspruch 6,
**dadurch gekennzeichnet, dass** der Kanal (35) eine Bewegungsfreiheit aufweist, die in Bezug auf die Struktur (75) auf einen Positionsbereich beschränkt ist.

8. Luftfahrzeug nach einem der Ansprüche 1 bis 7,
**dadurch gekennzeichnet, dass** der Durchgang (11) eine längliche Form aufweist.

9. Luftfahrzeug nach einem der Ansprüche 1 bis 8,
**dadurch gekennzeichnet, dass** ein Mindestabstand (200) zwischen dem Kanal und einer den Durchgang (11) begrenzenden Kante (13) der Verkleidung besteht, wobei dieser Mindestabstand (200) zwischen 5 Millimetern und 20 Millimetern beträgt.

10. Luftfahrzeug nach einem der Ansprüche 1 bis 9,
**dadurch gekennzeichnet, dass** der Kanal (35) aus der Verkleidung in die Außenumgebung (EXT) mit einer Mindesthöhe zwischen 5 Millimetern und 20 Millimetern vorspringt.

11. Luftfahrzeug nach einem der Ansprüche 1 bis 10,
**dadurch gekennzeichnet, dass** die Wölbung (50) zwischen dem Durchgang (11) und einem Rotor (25) des Luftfahrzeugs (1) angeordnet ist, wobei der Rotor (25) in der Außenumgebung (EXT) angeordnet ist.

12. Luftfahrzeug nach einem der Ansprüche 1 bis 11,
**dadurch gekennzeichnet, dass** das Belüftungssystem (30) mindestens ein Schutzgitter (81, 82) umfasst.

13. Luftfahrzeug nach Anspruch 12,
**dadurch gekennzeichnet, dass** das Schutzgitter (81) im freien Abschnitt (37) angeordnet ist.

14. Luftfahrzeug nach Anspruch 12,
**dadurch gekennzeichnet, dass** das Schutzgitter (82) zwischen der Wölbung (50) und der Verkleidung (10) angeordnet ist.

## Claims

1. Aircraft (1) with at least one electric machine (17) housed in a compartment (5) of this aircraft, said compartment (5) being separated by a cowling (10) from an external environment (EXT), the external environment (EXT) being located outside the aircraft (1), said aircraft (1) comprising a ventilation system (30) for conveying the air from the external environment (EXT) to the electric machine (17),
**characterized in that** the ventilation system (30) includes a duct (35) connected to the electric machine (17) and extending to a free section (37), the free section (37) being located in said external environment (EXT), the duct (35) passing through a passage (11) of the cowling (10), the duct (35) extending partially into the compartment (5) and partially into the external environment (EXT), an empty space (12) surrounding the duct (35) in the passage (11) and separating the duct (35) from the cowling (10), the ventilation system (30) comprising a scoop (50) facing the free section (37) without closing it off.

2. Aircraft according to Claim 1,
**characterized in that** said scoop (50) and said cowling (10) provide a corridor (60) extending along an axis of extension (DIREXT) from a first surface (61) open to the external environment (EXT) to a second surface (62) open to the external environment (EXT).

3. Aircraft according to Claim 2,
**characterized in that** the axis of extension (DIREXT) is parallel to a roll axis (AXROL) of the aircraft (1).

4. Aircraft according to one of Claims 1 to 3,
**characterized in that** said duct (35) includes at least one drainage orifice (70) upstream of the electric machine (17) in a direction from the external environment (EXT) to the electric machine (17).

5. Aircraft according to Claim 4,
**characterized in that** said duct (35) includes an inlet section (39) passing through the cowling (10) and an outlet section (38) connected to the inlet section (39) opening to the electric machine (17), the outlet section (38) extending along an axis of elongation (AX1) in the extension of the electric machine (17), the inlet section (39) extending along an axis of elevation (AX2) from the outlet section (38) to the external environment (EXT), said drainage orifice (70) being provided in the outlet section (38).

6. Aircraft according to one of Claims 1 to 5,
**characterized in that** said duct (35) is connected to a structure (75) immobile in a frame of reference (X,Y, Z) of the aircraft (1) by at least one fastener (76).

7. Aircraft according to Claim 6,
**characterized in that** said duct (35) includes freedom of movement limited to a range of positions relative to the structure (75).

8. Aircraft according to one of Claims 1 to 7,
**characterized in that** said passage (11) has an oblong form.

9. Aircraft according to one of Claims 1 to 8,
**characterized in that** a minimum distance (200) separates said duct and an edge (13) of the cowling delimiting the passage (11), this minimum distance (200) being between 5 millimetres and 20 millimetres.

10. Aircraft according to one of Claims 1 to 9,
**characterized in that** said duct (35) emerges from the cowling into the external environment (EXT) by a minimum height of between 5 millimeters and 20 millimeters.

11. Aircraft according to one of Claims 1 to 10,
**characterized in that** the scoop (50) is arranged between the passage (11) and a rotor (25) of said aircraft (1), said rotor (25) being located in the external environment (EXT).

12. Aircraft according to one of Claims 1 to 11,
**characterized in that** the ventilation system (30) includes at least one protective grille (81, 82).

13. Aircraft according to Claim 12,
**characterized in that** said protective grille (81) is arranged in the free section (37).

14. Aircraft according to Claim 12,
**characterized in that** said protective grille (82) is arranged between the scoop (50) and the cowling (10).
